# EUROPEAN PATENT SPECIFICATION

(11) **EP 3 213 984 B1**
(45) Date of publication and mention of the grant of the patent: **25.11.2020**
(21) Application number: 16184308.1
(22) Date of filing: 16.08.2016
(51) Int. Cl.: B62J 11/19, B62J 15/00

(54) **MUDGUARD DEVICE**
SCHUTZBLECHVORRICHTUNG
DISPOSITIF DE GARDE-BOUE

(30) Priority: 01.03.2016 TW 105106062
(43) Date of publication of application: 06.09.2017
(73) Proprietor: Sunny Wheel Industrial Co., Ltd., Chang Hua Hsien 504 (TW)
(72) Inventor: HSU, Kuo-Chung, Chang Hua Hsien 504 (TW)
(74) Representative: Schenk, Markus

(56) References cited:
- EP-A1- 2 703 266
- EP-A2- 2 388 186
- DE-U1-202007 007 576
- JP-A- H09 240 548

## Description

The disclosure relates to a mudguard device, more particularly to a mudguard device that is capable of concealing a cable disposed therein.

When a bicycle is equipped with an electrical device, a cable of the electrical device is generally fixed on a mudguard of the bicycle. European Patent Nos. 0865983, 2060478, and 2703266, and German Patent No. 202007007576 disclose a kind of conventional mudguard device, which has a main body formed with a groove for receiving a cable, and an insert cover coupled to the main body and covering the groove to conceal the cable. The presence of the insert cover adversely affects the appearance of the conventional mudguard device. Furthermore, the insert cover needs to be made of a rigid and elongated material which inevitably results in a relatively high weight of the conventional mudguard device.

European Patent No. 1785342 discloses another conventional mudguard device, which has a plurality of double-coupling clamps for fixing a cable. The double-coupling clamps have a complicated structure that is difficult to manufacture. In addition, since the double-coupling clamps are small in size, multiple double-coupling clamps are required to fix the cable.

European Patent No. 2388186 discloses still another conventional mudguard device, which includes a mudguard, and a plurality of cable holding members. The mudguard has a main body and two opposite clamp holders. Each of the clamp holders extends from a bottom surface of the main body, and has a groove facing opposite to the bottom surface of the main body. Each of the cable holding members includes two opposite engaging plates respectively engaging the grooves, a connecting plate interconnecting distal ends of the engaging plates, and two abutting plates extending obliquely from the connecting plates toward the bottom surface of the mudguard. When fixing a cable, the abutting plates push resiliently the cable to abut against the bottom surface of the main body.

However, since the abutting plates only prevents radial movement of the cable, the cable may still slide laterally along the bottom surface of the main body of the mudguard rather than being firmly fixed.

Therefore, an object of the disclosure is to provide a mudguard device that can alleviate one of the drawbacks associated with the prior art.

The mudguard device according to the invention is defined in claim 1. Advantageous embodiments are set out in the dependent claims 2-10. Accordingly, the mudguard device is adapted to conceal a cable which is disposed therein. The mudguard device includes a mudguard and a cable holding member. The mudguard has a cover plate extending along a curved line, and two opposite fixing plates. Each of the fixing plates is parallel to the curved line, extends from a bottom surface of the cover plate toward the other one of the fixing plates, has a bent end portion distal from the cover plate, and cooperates with the cover plate to define a first receiving space. The cable holding member has two engaging portions respectively and removably engaging the first receiving spaces, a connecting portion, and a plurality of abutting portions. The connecting portion is connected between the engaging portions, cooperates with the cover plate to define a second receiving space larger than the first receiving space, is formed with a plurality of openings spaced apart from each other in a longitudinal direction parallel to the curved line, is flexible in both the longitudinal direction and a transverse direction perpendicular to the longitudinal direction, and has a flexibility in the longitudinal direction larger than that in the transverse direction. The second receiving space and the first receiving space are adapted for receiving the cable. The abutting portions are disposed on a side of the connecting portion facing the second receiving space, and have a flexibility in the transverse direction larger than that of said connecting portion in the transverse direction.

Other features and advantages of the disclosure will become apparent in the following detailed description of the embodiments with reference to the accompanying drawings, of which:
Figure 1 is a fragmentary bottom view of a first embodiment of a mudguard device according to the disclosure;
Figure 2 is a fragmentary perspective view of a mudguard of the first embodiment;
Figure 3 is a sectional view of the first embodiment;
Figure 4 is a perspective view of a cable holding member of the first embodiment;
Figure 5 is a view similar to Figure 3, but illustrating two cables being received respectively in two first receiving spaces;
Figure 6 is another sectional view of the first embodiment, illustrating two cables being received in a second receiving space;
Figure 7 is a view similar to Figure 6, but illustrating a larger cable being received in the second receiving space;
Figure 8 is a perspective view of a cable holding member of a second embodiment of the mudguard device according to the disclosure;
Figure 9 is a sectional view of the second embodiment, illustrating two cables being received respectively in the first receiving spaces;
Figure 10 is another sectional view of the second embodiment, illustrating two cables being received in the second receiving space; and
Figure 11 is a view similar to Figure 10, but illustrating a larger cable being received in the second receiving space.

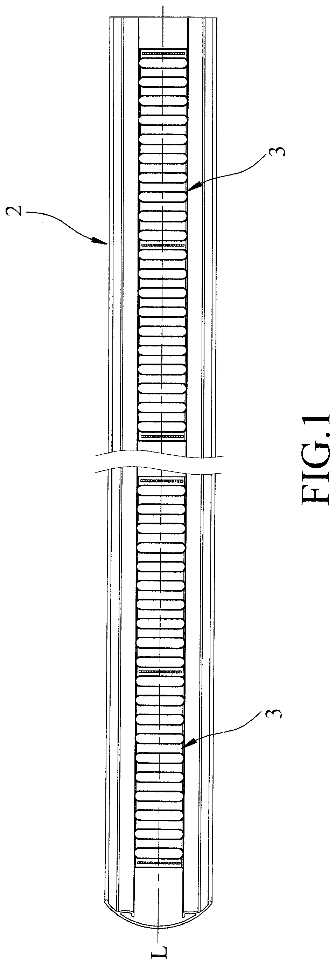

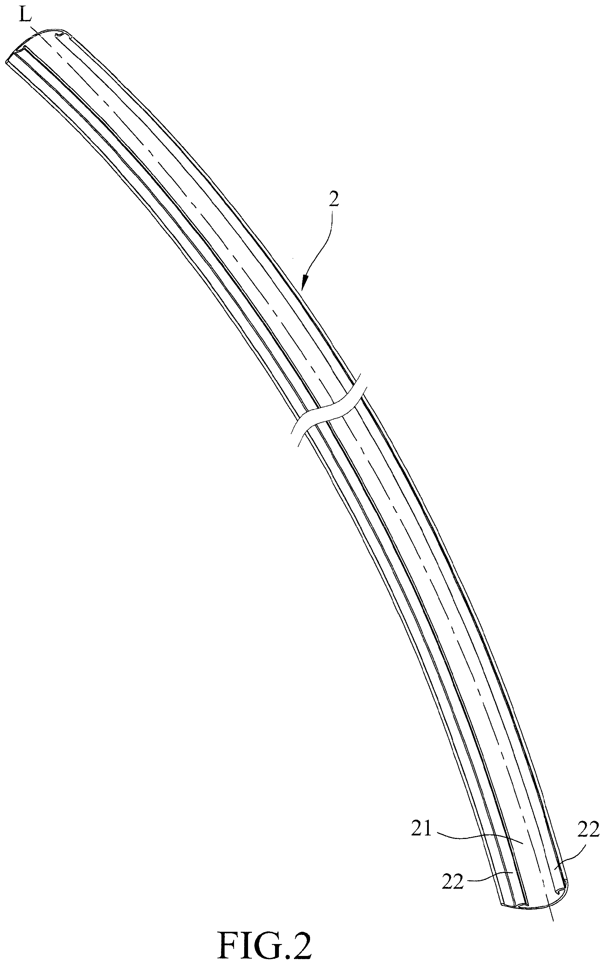

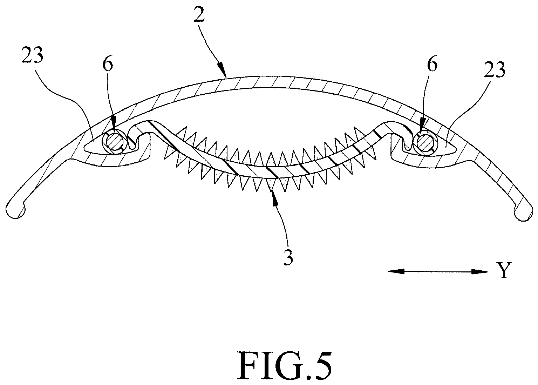

Referring to Figures 1 to 3, a first embodiment of a mudguard device according to the present disclosure is adapted to conceal at least one cable 6 (see Figure 5) which is disposed therein. The mudguard device includes a mudguard 2 and two cable holding members 3. The mudguard 2 has a cover plate 21 extending along a curved line (L), and two opposite fixing plates 22. Each of the fixing plates 22 is parallel to the curved line (L), extends from a bottom surface of the cover plate 21 toward the other one of the fixing plates 22, has a bent end portion distal from the cover plate 21, and cooperates with the cover plate 21 to define a first receiving space 23. The cable holding members 3 are coupled removably to a bottom portion of the mudguard 2 and extend in a longitudinal direction parallel to the curved line (L). Since the structures of the cable holding members 3 are identical, only one cable holding member 3 will be described in the following for the sake of brevity.

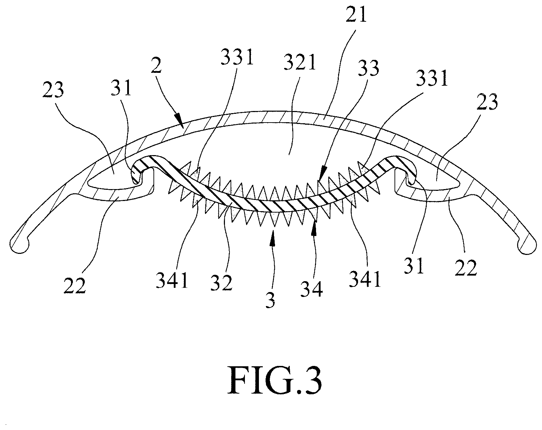

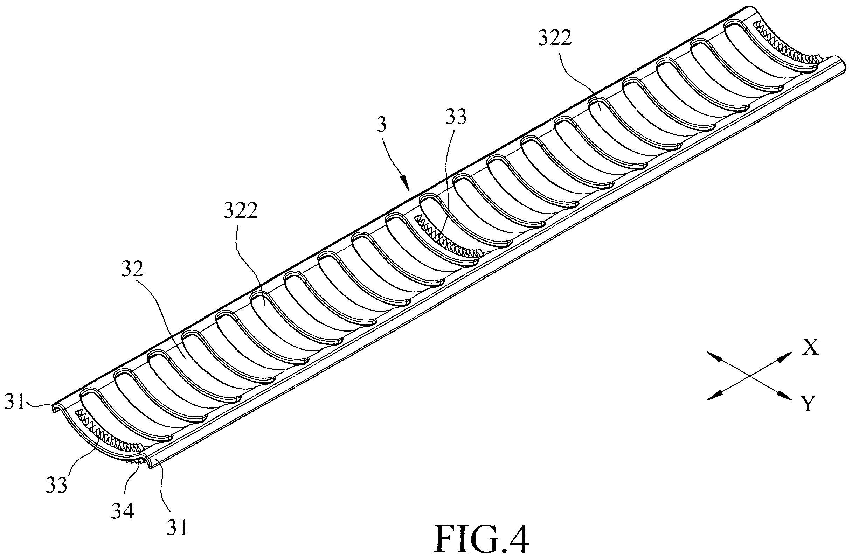

Referring to Figures 3 and 4, in this embodiment, the cable holding member 3 has two engaging portions 31 respectively and removably engaging the first receiving spaces 23, a connecting portion 32 connected between the engaging portions 31 and cooperating with the cover plate 21 to define a second receiving space 321 that is larger than the first receiving spaces 23, three abutting portions 33 disposed on a side of the connecting portion 32 that faces the second receiving space 321, and three extending portions 34 disposed on another side of the connecting portion 32 that is opposite to the second receiving space 321.

The connecting portion 32 is formed with a plurality of openings 322 spaced apart from each other in the longitudinal direction parallel to the curved line (L) . In this embodiment, the connecting portion 32 is flexible in both the longitudinal direction and a transverse direction perpendicular to the longitudinal direction.

The abutting portions 33 are spaced apart from one another in the longitudinal direction. Each of the abutting portions 33 has a plurality of spaced-apart upper flexible sections 331.

The extending portions 34 are spaced apart from one another in the longitudinal direction. Each of the extending portions 34 has a plurality of spaced-apart lower flexible sections 341.

The connecting portion 32 has a flexibility in the longitudinal direction larger than that in the transverse direction. The abutting portions 33 have a flexibility in the transverse direction larger than that of the connecting portion 32 in the transverse direction.

When the cable holding member 3 is separated from the mudguard 2, each of the engaging portions 31 is straight and extends in a length direction (X) . A ratio between a length of the cable holding member 3 in the length direction (X) and a width thereof in a width direction (Y) which is perpendicular to the length direction (X) is larger than 3. Such ratio is designed to reduce the total installation time of the multiple cable holding members 3, since if the length of each cable holding member 3 is not long enough to meet the ratio, a user would need to install even more cable holding members 3 on the mudguard 2 for securing the at least one cable 6.

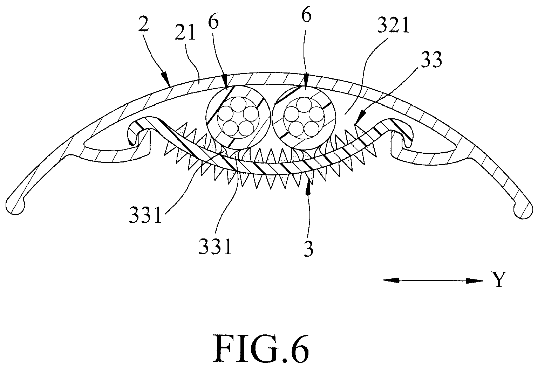

In use, the cable holding member 3 is installed on the mudguard 2 with the engaging portions 31 engaging respectively the first receiving spaces 23. The first and second receiving spaces 23, 321 can receive the cable 6 of different sizes. For instance, referring to Figure 5, each of the first receiving spaces 23 is suitable for receiving the cable 6 that has a small size . Referring to Figure 6, the second receiving space 321 can receive two cables 6 of a larger size. At this time, since the flexibility of the abutting portions 33 in the transverse direction is larger than that of the connecting portion 32, the upper flexible sections 331 will resiliently deform to push the cables 6 to abut against the cover plate 21 of the mudguard 2 without significantly deforming the connecting portion 32, thereby securing the cables 6 in the second receiving space 321.

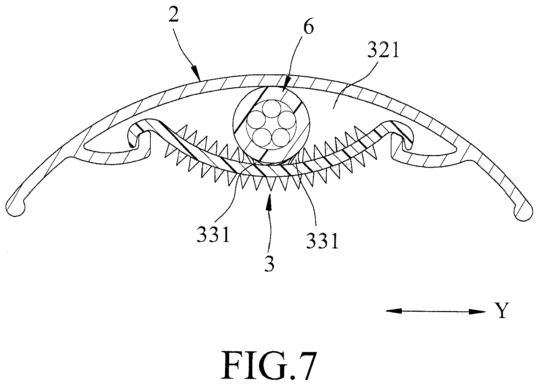

Referring to Figure 7, the cable 6 of a size even larger than that illustrated in the Figure 6 can also be received in the second receiving space 321 with the upper flexible sections 331 being pressed harder, thereby resulting in a greater deformation of the upper flexible sections 331 for properly securing the cable 6.

Specifically, the advantages of the mudguard device can be summarized in the following:
1. An appearance of the mudguard 2 can be well maintained by virtue of the cable holding member 3 being coupled to the bottom portion of the mudguard 2.
2. Since the connecting portion 32 is flexible in the longitudinal direction, the cable holding member 3 can be applied to mudguards 2 of different curvatures.
3. By virtue of the flexibility of the connecting portion 32 in the transverse direction, the engaging portions 31 of the cable holding member 3 can easily engage the first receiving spaces 23 via deformation of the connecting portion 32, thereby facilitating the installation of the cable holding member 3.
4. The configuration of the lower flexible sections 341 increases the area for attracting mud splashed by a tire, thereby preventing over-accumulation mud on the bottom side of the mudguard 2.
5. The first receiving spaces 23 and the second receiving space 321 can receive the cables 6 of different sizes, thereby improving the flexibility in usage of the disclosure.
6. With the disposition of the openings 322, the flexibility of the connecting portion 32 of each of the cable holding members 3 in the longitudinal direction can be ensured to be larger than that in the transverse direction, and the cable holding member 3 becomes lighter since less material is used, which also reduces the manufacturing cost thereof.
7. In comparison with the abovementioned prior art, since the flexibility of the abutting portion 33 in transverse direction is larger than that of the connecting portion 32, the cable 6 can be firmly secured in the second receiving space and clamped between the upper flexible sections 331 and the cover plate 21.

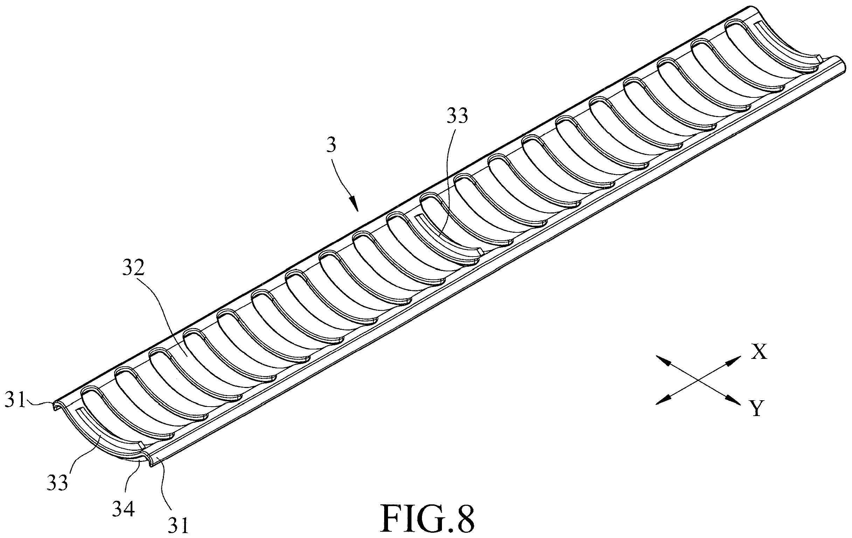

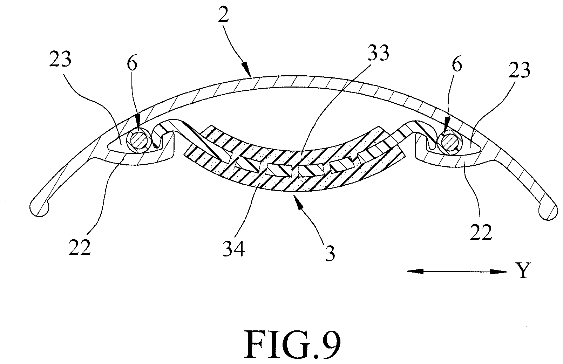

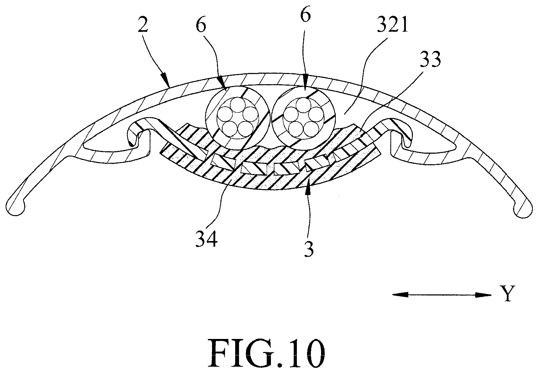

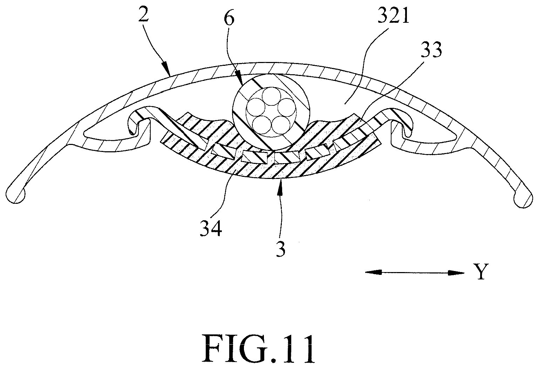

As shown in Figures 8 to 11, a second embodiment of the mudguard device has a structure similar to that of the first embodiment. The main difference between this embodiment and the previous embodiment resides in the configuration of the abutting portions 33 and the extending portion 34 of each cable holding member 3. For each cable holding member 3, the abutting portion 33 is formed as a strip extending in the transverse direction. In this embodiment, each of the abutting portions 33 are made of a material softer than that of the connecting portion 32. For example, the abutting portions 33 are made of silicone gel, and the connecting portion 32 is made of plastic. Likewise, for each cable holding member 3, the extending portions 34 are formed as a strip extending in the transverse direction, and the abutting portions 33 and the extending portions 34 are made of a same material and are directly formed on the connecting portion 32. The second embodiment has the same advantages as those of first embodiment.

In sum, due to the flexibility of the connecting portion 32 in the transverse direction, the engaging portions 31 of each cable holding member 3 can easily engage the first receiving spaces 23 of the mudguard 2. Moreover, with the design of imparting different flexibilities to the abutting portions 33 and the connecting portion 32 in the transverse direction, the cable 6 can be firmly fixed and held by the cable holding members 3.

## Claims

1. A mudguard device adapted to conceal a cable (6) which is disposed therein, said mudguard device being **characterized by**:
a mudguard (2) having
a cover plate (21) that extends along a curved line (L), and
two opposite fixing plates (22), each of which is parallel to the curved line (L), extends from a bottom surface of said cover plate (21) toward the other one of the fixing plates (22), has a bent end portion distal from said cover plate (21), and cooperates with said cover plate (21) to define a first receiving space (23) ; and
a cable holding member (3) having
two engaging portions (31) that respectively and removably engage said first receiving spaces (23),
a connecting portion (32) that is connected between said engaging portions (31), that cooperates with said cover plate (21) to define a second receiving space (321) that is larger than said first receiving spaces (23), that is formed with a plurality of openings (322) spaced apart from each other in a longitudinal direction parallel to the curved line (L), that is flexible in both the longitudinal direction and a transverse direction perpendicular to the longitudinal direction, and that has a flexibility in the longitudinal direction larger than that in the transverse direction, said second receiving space (321) and said first receiving space (23) being adapted for receiving the cable (6), and
**characterized in that**
a plurality of abutting portions (33) are disposed on a side of said connecting portion (32) facing said second receiving space (321), and have a flexibility in the transverse direction larger than that of said connecting portion (32) in the transverse direction.

2. The mudguard device as claimed in claim 1, **characterized in that** said abutting portions (33) are spaced apart from each other in the longitudinal direction.

3. The mudguard device as claimed in claim 2, further **characterized in that** each of said abutting portions (33) has a plurality of spaced-apart upper flexible sections (331).

4. The mudguard device as claimed in claim 2, further **characterized in that** each of said abutting portions (33) is formed as a strip extending in the transverse direction.

5. The mudguard device as claimed in claim 4, further **characterized in that** each of said abutting portions (33) is made of a material softer than that of said connecting portion (32).

6. The mudguard device as claimed in any one of claims 1 to 5, further **characterized in that** said cable holding member (3) further has a plurality of extending portions (34) disposed on another side of said connecting portion (32) that is opposite to said second receiving space (321) .

7. The mudguard device as claimed in claim 6, further **characterized in that** said extending portions (34) are spaced apart from each other in the longitudinal direction.

8. The mudguard device as claimed in claim 7, further **characterized in that** each of said extending portions (34) has a plurality of spaced-apart lower flexible sections (341).

9. The mudguard device as claimed in claim 7, further **characterized in that** each of said extending portions (34) is formed as a strip extending in the transverse direction.

10. The mudguard device as claimed in any one of the previous claims, **characterized in that**:
each of said engaging portions (31) is straight and extends in a length direction (X) when said cable holding member (3) is separated from said mudguard (2); and
a ratio between a length of said cable holding member (3) in the length direction (X) and a width thereof in a width direction (Y) which is perpendicular to the length direction (X) is larger than 3.

## Patentansprüche

1. Eine Schmutzfängervorrichtung, die dazu angepasst ist, ein Kabel (6), das in derselben angeordnet ist, zu verdecken, wobei die Schmutzfängervorrichtung durch Folgendes gekennzeichnet ist:
einen Schmutzfänger (2) mit
einer Abdeckplatte (21), die sich entlang einer gekrümmten Linie (L) erstreckt, und
zwei gegenüberliegenden Befestigungsplatten (22), von denen jede parallel zu der gekrümmten Linie (L) ist, sich von einer unteren Oberfläche der Abdeckplatte (21) aus hin zu der anderen der Befestigungsplatten (22) erstreckt, einen von der Abdeckplatte (21) distalen gebogenen Endabschnitt aufweist und mit der Abdeckplatte (21) zusammenwirkt, um einen ersten Aufnahmeraum (23) zu definieren; und
ein Kabelhaltebauglied (3) mit
zwei Ineingriffnahmeabschnitten (31), die die ersten Aufnahmeräume (23) jeweils lösbar in Eingriff nehmen,
einem Verbindungsabschnitt (32), der zwischen die Ineingriffnahmeabschnitte (31) geschaltet ist, der mit der Abdeckplatte (21) zusammenwirkt, um einen zweiten Aufnahmeraum (321) zu definieren, der größer ist als die ersten Aufnahmeräume (23), der mit einer Mehrzahl von Öffnungen (322) gebildet ist, die in einer zu der gekrümmten Linie (L) parallelen Längsrichtung voneinander beabstandet sind, der sowohl in der Längsrichtung als auch in einer zu der Längsrichtung senkrechten Querrichtung biegsam ist und der in der Längsrichtung eine größere Biegsamkeit aufweist als in der Querrichtung, wobei der zweite Aufnahmeraum (321) und der erste Aufnahmeraum (23) zum Aufnehmen des Kabels (6) angepasst sind, und **dadurch gekennzeichnet, dass**
eine Mehrzahl von angrenzenden Abschnitten (33) auf einer Seite des Verbindungsabschnitts (32) angeordnet sind, die dem zweiten Aufnahmeraum (321) zugewandt ist, und in der Querrichtung eine Biegsamkeit aufweisen, die größer ist als die des Verbindungsabschnitts (32) in der Querrichtung.

2. Die Schmutzfängervorrichtung gemäß Anspruch 1, die **dadurch gekennzeichnet ist, dass** die angrenzenden Abschnitte (33) in der Längsrichtung voneinander beabstandet sind.

3. Die Schmutzfängervorrichtung gemäß Anspruch 2, die ferner **dadurch gekennzeichnet ist, dass** jeder der angrenzenden Abschnitte (33) eine Mehrzahl von voneinander beabstandeten oberen biegsamen Segmenten (331) aufweist.

4. Die Schmutzfängervorrichtung gemäß Anspruch 2, die ferner **dadurch gekennzeichnet ist, dass** jeder der angrenzenden Abschnitte (33) als sich in der Querrichtung erstreckender Streifen gebildet ist.

5. Die Schmutzfängervorrichtung gemäß Anspruch 4, die ferner **dadurch gekennzeichnet ist, dass** jeder der angrenzenden Abschnitte (33) aus einem weicheren Material hergestellt ist als der Verbindungsabschnitt (32).

6. Die Schmutzfängervorrichtung gemäß einem der Ansprüche 1 bis 5, die ferner **dadurch gekennzeichnet ist, dass** das Kabelhaltebauglied (3) ferner eine Mehrzahl von Erstreckungsabschnitten (34) aufweist, die auf einer anderen Seite des Verbindungsabschnitts (32) angeordnet sind, die dem zweiten Aufnahmeraum (321) gegenüberliegt.

7. Die Schmutzfängervorrichtung gemäß Anspruch 6, die ferner **dadurch gekennzeichnet ist, dass** die Erstreckungsabschnitte (34) in der Längsrichtung voneinander beabstandet sind.

8. Die Schmutzfängervorrichtung gemäß Anspruch 7, die ferner **dadurch gekennzeichnet ist, dass** jeder der Erstreckungsabschnitte (34) eine Mehrzahl von voneinander beabstandeten unteren biegsamen Segmenten (341) aufweist.

9. Die Schmutzfängervorrichtung gemäß Anspruch 7, die ferner **dadurch gekennzeichnet ist, dass** jeder der Erstreckungsabschnitte (34) als sich in der Querrichtung erstreckender Streifen gebildet ist.

10. Die Schmutzfängervorrichtung gemäß einem der vorhergehenden Ansprüche, die **dadurch gekennzeichnet ist, dass**:
jeder der Ineingriffnahmeabschnitte (31) gerade ist und sich in einer Längenrichtung (X) erstreckt, wenn das Kabelhaltebauglied (3) von dem Schmutzfänger (2) getrennt ist; und
ein Verhältnis zwischen einer Länge des Kabelhaltebauglieds (3) in der Längenrichtung (X) und einer Breite desselben in einer Breitenrichtung (Y), die senkrecht zu der Längenrichtung (X) ist, mehr als 3 beträgt.

## Revendications

1. Dispositif de garde-boue adapté pour dissimuler un câble (6) qui y est disposé, ledit dispositif de garde-boue étant **caractérisé par**:
un garde-boue (2) présentant
une plaque de recouvrement (21) qui s'étend le long d'une ligne courbe (L), et
deux plaques de fixation opposées (22), dont chacune est parallèle à la ligne courbe (L), s'étend d'une surface inférieure de ladite plaque de recouvrement (21) vers l'autre des plaques de fixation (22), présente une partie d'extrémité recourbée distale par rapport à ladite plaque de recouvrement (21), et coopère avec ladite plaque de recouvrement (21) pour définir un premier espace de réception (23); et
un élément de maintien de câble (3) présentant
deux parties de venue en prise (31) qui viennent en prise de manière respective et amovible avec lesdits premiers espaces de réception (23),
une partie de connexion (32) qui est connectée entre lesdites parties de venue en prise (31), qui coopère avec ladite plaque de recouvrement (21) pour définir un deuxième espace de réception (321) qui est plus grand que lesdits premiers espaces de réception (23), qui est formé avec une pluralité d'ouvertures (322) distantes l'une de l'autre dans une direction longitudinale parallèle à la ligne courbe (L), qui est flexible tant dans la direction longitudinale que dans une direction transversale perpendiculaire à la direction longitudinale, et qui présente une flexibilité dans la direction longitudinale qui est supérieure à celle dans la direction transversale, ledit deuxième espace de réception (321) et ledit premier espace de réception (23) étant adaptés pour recevoir le câble (6), et
**caractérisé par le fait que**
une pluralité de parties venant en butée (33) sont disposées d'un côté de ladite partie de connexion (32) faisant face audit deuxième espace de réception (321), et présentent une flexibilité dans la direction transversale qui est supérieure à celle de ladite partie de connexion (32) dans la direction transversale.

2. Dispositif de garde-boue selon la revendication 1, **caractérisé par le fait que** lesdites parties venant en butée (33) sont distantes l'une de l'autre dans la direction longitudinale.

3. Dispositif de garde-boue selon la revendication 2, **caractérisé par** ailleurs par le fait que chacune desdites parties venant en butée (33) présente une pluralité de segments flexibles supérieurs distants l'un de l'autre (331).

4. Dispositif de garde-boue selon la revendication 2, **caractérisé par** ailleurs par le fait que chacune desdites parties venant en butée (33) se présente en forme de bande s'étendant dans la direction transversale.

5. Dispositif de garde-boue selon la revendication 4, **caractérisé par** ailleurs par le fait que chacune desdites parties venant en butée (33) est réalisée en un matériau plus souple que celui de ladite partie de connexion (32).

6. Dispositif de garde-boue selon l'une quelconque des revendications 1 à 5, **caractérisé par** ailleurs par le fait que ledit élément de maintien de câble (3) présente par ailleurs une pluralité de parties de prolongement (34) disposées d'un autre côté de ladite partie de connexion (32) qui est opposé audit deuxième espace de réception (321).

7. Dispositif de garde-boue selon la revendication 6, **caractérisé par** ailleurs par le fait que lesdites parties de prolongement (34) sont distantes l'une de l'autre dans la direction longitudinale.

8. Dispositif de garde-boue selon la revendication 7, **caractérisé par** ailleurs par le fait que chacune desdites parties de prolongement (34) présente une pluralité de segments flexibles inférieurs distants l'un de l'autre (341).

9. Dispositif de garde-boue selon la revendication 7, **caractérisé par** ailleurs par le fait que chacune desdites parties de prolongement (34) se présente en forme de bande s'étendant dans la direction transversale.

10. Dispositif de garde-boue selon l'une quelconque des revendications précédentes, **caractérisé par le fait que**:
chacune desdites parties de venue en prise (31) est rectiligne et s'étend dans une direction de la longueur (X) lorsque ledit élément de maintien de câble (3) est séparé dudit garde-boue (2); et
un rapport entre une longueur dudit élément de maintien de câble (3) dans la direction de la longueur (X) et une largeur de celui-ci dans une direction de la largeur (Y) qui est perpendiculaire à la direction de la longueur (X) est supérieur à 3.
